Europäisches Patentamt

European Patent Office

Office européen des brevets

(11) Publication number: **0 273 356 B1**

(12) **EUROPEAN PATENT SPECIFICATION**

(45) Date of publication of patent specification: **29.04.92**   (51) Int. Cl.⁵: **G11B 7/135, G11B 7/12**

(21) Application number: **87119014.6**

(22) Date of filing: **22.12.87**

(54) **An optical head.**

(30) Priority: **25.12.86 JP 310887/86**
**16.03.87 JP 61725/87**
**12.06.87 JP 147681/87**

(43) Date of publication of application:
**06.07.88 Bulletin 88/27**

(45) Publication of the grant of the patent:
**29.04.92 Bulletin 92/18**

(84) Designated Contracting States:
**DE FR GB NL**

(56) References cited:
**EP-A- 0 228 620**

**PATENT ABSTRACTS OF JAPAN volume 10, no. 160 (P-465)(2216) 7th June 1986**

**PATENT ABSTRACTS OF JAPAN volume 11, no. 370 (P-642)(2817) 3rd December 1987**

**PATENT ABSTRACTS OF JAPAN, volume 9, no. 37 (P-335)(1760) 16th February 1985**

(73) Proprietor: **NEC CORPORATION**
**7-1, Shiba 5-chome Minato-ku**
**Tokyo 108-01(JP)**

(72) Inventor: **Ono, Yuzo c/o NEC Corporation**
**7-1, Shiba 5-chome**
**Minato-ku Tokyo(JP)**

(74) Representative: **Vossius & Partner**
**Siebertstrasse 4 P.O. Box 86 07 67**
**W-8000 München 86(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(-/2.18/2.0)

# Description

The invention relates to an optical head, and more particularly to an optical head by which informations can be recorded into and read out of such an optical disk as a DRAW (Direct Read After Write) optical disk, E-DRAW (Erasable Direct Read After Write) optical disk, video disk, digital audio disk and so on.

One of conventional optical heads comprises a semiconductor laser from which laser beam radiates, a collimating lens for collimating the laser beam, a polarizing beam splitter for passing the laser beam from the semiconductor laser and for reflecting the laser beam which is reflected from an optical disk, a 1/4 wavelength plate for converting the laser beam which is passed through the polarizing beam splitter into a circularly polarized laser beam and for converting the laser beam which is reflected from the optical disk into a linearly polarized laser beam having a polarized plane orthogonal to the polarization of the laser beam path, a total reflecting prism for reflecting the laser beam which is passed through the 1/4 wavelength plate and which is reflected from the optical disk, an object lens for focusing the laser beam from the semiconductor laser on the optical disk and for collimating the laser beam which is reflected from the optical disk, a focusing lens for focusing the laser beam which is reflected by the polarizing beam splitter, a beam splitter for dividing the laser beam which is focussed by the focusing lens into passing and reflected beams, a first two-divided optical detector for receiving the laser beam which is passed through the beam splitter to provide a track error signal and a RF signal, a knife-edge for shielding a half of the laser beam which is reflected by the beam splitter, and a second two-divided optical detector for receiving the remaining half of the laser beam which is not shielded by the knife-edge to provide a focus error signal.

In operation, the laser beam which is radiated from the semiconductor laser is collimated by the collimating lens, and then passed through the polarizing beam splitter. The laser beam which is passed through the polarizing beam splitter is converted into a circularly polarized beam, and then reflected by the total reflecting prism. Thereafter, the laser beam is focussed on the optical disk by the object lens, and then reflected therefrom to be reflected again by the total reflecting prism. The laser beam thus reflected is converted into a linearly polarized laser beam having a polarized plane orthogonal to the polarization of the laser beam path by the 1/4 wavelength plate, and then reflected by the polarizing beam splitter. Thereafter, the laser beam is focussed by the focusing lens.

The laser beam thus focussed is partially passed through the beam splitter to be received by the first two-divided optical detector from which the track error signal is obtained in the calculation of the subtraction between signals of two optical detecting elements therein by the push-pull method, and the RF signal is obtained in the calculation of the addition between the signals thereof. On the other hand, a half of the laser beam which is reflected by the beam splitter is not shielded by the knife edge to be received by the second two-divided optical detector from which the focus error signal is obtained in the calculation of the subtraction between signals of two optical detecting elements therein by the foucault method.

According to the conventional optical head, however, there is a disadvantage that an optical head which is put into a practical use is larger in its size than, for instance, $40 \times 40 \times 30mm^3$ so that it is bulky and heavy. There is a further disadvantage that lights supplied to the two optical detecting elements become inbalanced because the light axis of the object lens is deviated in regard to the dividing line of the first two-divided optical detector when the object lens is moved in a direction vertical to the light axis by an actuator which is operated in accordance with a tracking error signal. Consequently, there is resulted a still further disadvantage that a direct current offset is induced in the tracking error signal so that the scope becomes narrower in controlling the tracking error. In addition, there is a yet further disadvantage that the manufacturing costs are high because many parts which are necessary to be polished optically are used therein.

From JP-A-59 17 7734 a focal difference distance detector is known for adjustment of an optical system. This system comprises an astigmatism grating lens having a concentrical ellipse-like pattern. Optical beams reflected from the focus of an information recording surface are converted into parallel light flux by a lens and are made incident to said grating lens. The incident light is diffracted by the rough structure formed on the grating lens. The diffracted light is received by a 4-divided light detector. The shape of the diffracted light on the surface of the light detector depends upon the position of the focus with respect to the information recording surface.

In JP-A-61 11 9740 an optical head device is described in which a diffraction grating is used having two frame gratings with different grating patterns. The reflected light from an information recording surface is diffracted by said diffraction grating in different directions and guided to different photodetectors. Output signals of those photodetectors are processed to obtain a focus error signal, tracking error signal and information play-back signal necessary for the optical head device.

In EP-A-0 228 620 published after the priority date of the present invention and owned by the same applicant an optical head comprising a diffraction grating for directing two or more diffracted beams to optical detectors is described.

Accordingly, it is an object of the invention to provide an optical head which is small in its size and light in its weight.

It is a further object of the invention to provide an optical head in which the scope of controlling a tracking error is wide.

It is a still further object of the invention to provide an optical head which is manufactured with a low cost.

These objects are achieved by an optical head comprising the features of claim 1. Preferred embodiments of the invention are given in the sub claims.

The invention will be described in more detail in conjunction with the following drawings wherein:

Figs. 1A to 1C are explanatory views showing conventional optical heads,

Figs. 2 and 3 are explanatory views showing an optical head in a first embodiment according to the invention,

Figs. 4A to 4C are explanatory diagrams showing an optical detector for detecting a focusing error,

Fig. 5 is an explanatory view showing a grating lens for an optical head in a second embodiment according to the invention,

Fig. 6 is an explanatory view showing a grating lens for an optical head in a third embodiment according to the invention,

Figs. 7 and 8 are explanatory views showing an optical head in a fourth embodiment according to the invention,

Figs. 9A to 9C are explanatory diagram showing an optical detector for the optical head in the fourth embodiment according to the invention,

Figs. 10 and 11 are explanatory views showing an optical head in a fifth embodiment according to the invention, and

Fig. 12 is an explanatory diagram showing the diffraction efficiency in regard to $\lambda/d$ in the fifth embodiment according to the invention.

Before explaining a preferred embodiment according the invention, conventional optical heads will be explained.

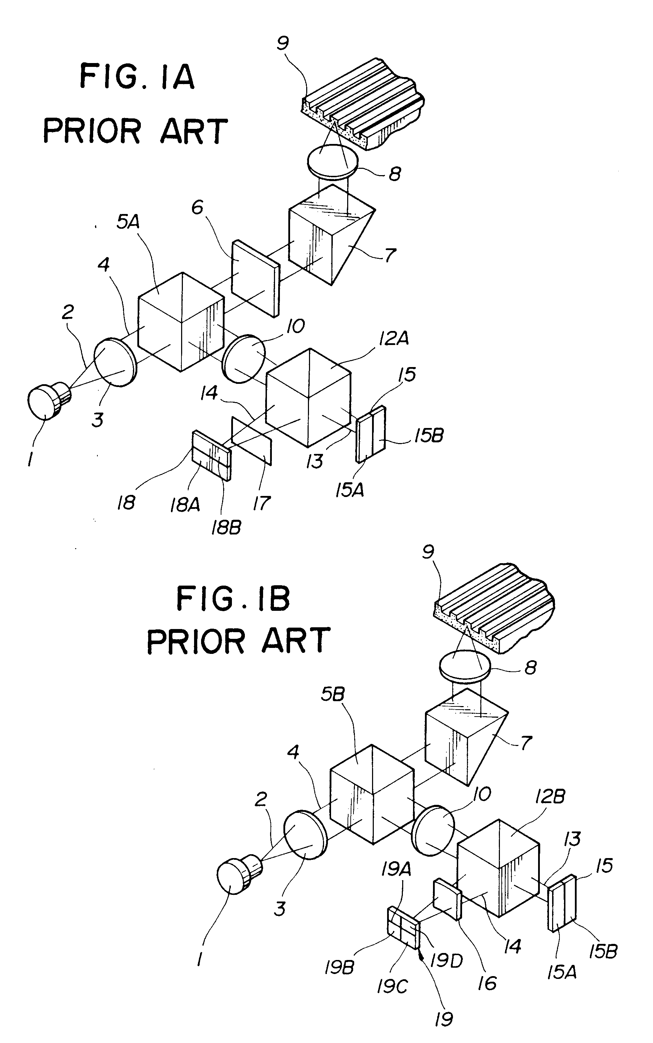

In Fig. 1A, there is shown a first conventional optical head which was briefly described before. The conventional optical head comprises a semiconductor laser 1 from which laser beam 2 radiates, a collimating lens 3 for collimating the laser beam 2, a polarizing beam splitter 5A for passing the laser beam 4 from the semiconductor laser 1 and for reflecting the laser beam which is reflected from an optical disk 9, a 1/4 wavelength plate 6 for converting the laser beam which is passed through the polarizing beam splitter 5A into a circularly polarized laser beam and for converting the laser beam which is reflected from the optical disk 9 into a linearly polarized laser beam having a polarized plane orthogonal to the polarization of the laser beam path, a total reflecting prism 7 for reflecting the laser beam which is passed through the 1/4 wavelength plate 6 and which is reflected from the optical disk 9, an object lens 8 for focusing the laser beam from the semiconductor laser 1 on the optical disk 9 and for collimating the laser beam which is reflected from the optical disk 9, a focusing lens 10 for focusing the laser beam which is reflected by the polarizing beam splitter 5A, a beam splitter 12A for dividing the laser beam which is focussed by the focusing lens 10 into passing and reflected beams 13 and 14, a first two-divided optical detector 15 having optical detecting elements 15A and 15B for receiving the laser beam 13 which is passed through the beam splitter 12A to provide a track error signal and RF signal, a knife-edge 17 for shielding a half of the laser beam 14 which is reflected by the beam splitter 12A, and a second two-divided optical detector 18 having optical detecting elements 18A and 18B for receiving the remaining half of the laser beam 14 which is not shielded by the knife edge 17 to provide a focus error signal.

The operation of the first conventional optical head was described before so that repeated explanations are omitted here.

In Fig. 1B, there is shown a second conventional optical head in which like parts are indicated by like reference numerals as in Fig. 1A except that the polarizing beam splitter 5A, beam splitter 12A, knife-edge 17 and two-divided optical detector 18 are replaced respectively by a beam splitter 5B, polarizing beam splitter 12B, cylindrical lens 16 and four-divided optical detector 19 having optical detecting elements 19A to 19D , and the 1/4 wavelength plate 6 is removed.

In operation, the laser beam supplied from the focusing lens 10 is divided into polarized laser beams 13 and 14 having polarized planes orthogonal to each other by the polarizing beam splitter 12B. The laser beam which is thus passed through the polarizing beam splitter 12B is received in the two-divided optical detector 15 having optical detecting elements 15A and 15B from which a track error signal is obtained in the calculation of the subtraction between signals of the optical detecting elements 15A and 15B by the push-pull method. On the other hand, the laser beam 14 which is reflected by the polarizing beam splitter 12B is passed through the cylindrical lens 16 to have astigmatism wave plane, and then received in the four-divided optical detector 19 from which a focus error signal is obtained in the astigmatism method. In the four-divided optical detector 19, the focus error signal is obtained in the calculation of $V_A + V_B - V_C - V_D$, where $V_A$, $V_B$, $V_C$ and $V_D$ are output voltage of the optical detecting elements 19A to 19D respectively. Further, if it is assumed that output voltages of the optical detecting elements 15A and 15B of the two-divided optical detector 15 are $V'_A$ and $V'_B$, a RF signal is obtained in the calculation of $V'_A + V'_B - V_A - V_B - V_C - V_D$. In the second conventional optical head, the polarized plane of the laser beam from the semiconductor laser 1 is positioned to be inclined by fourty-five degrees in regard to a base plane of the optical system because the beam splitter 5B is of non-polarizing type so that the divided laser beams 13 and 14 of the polarizing beam splitter 12B are parallel to the base plane of the optical system.

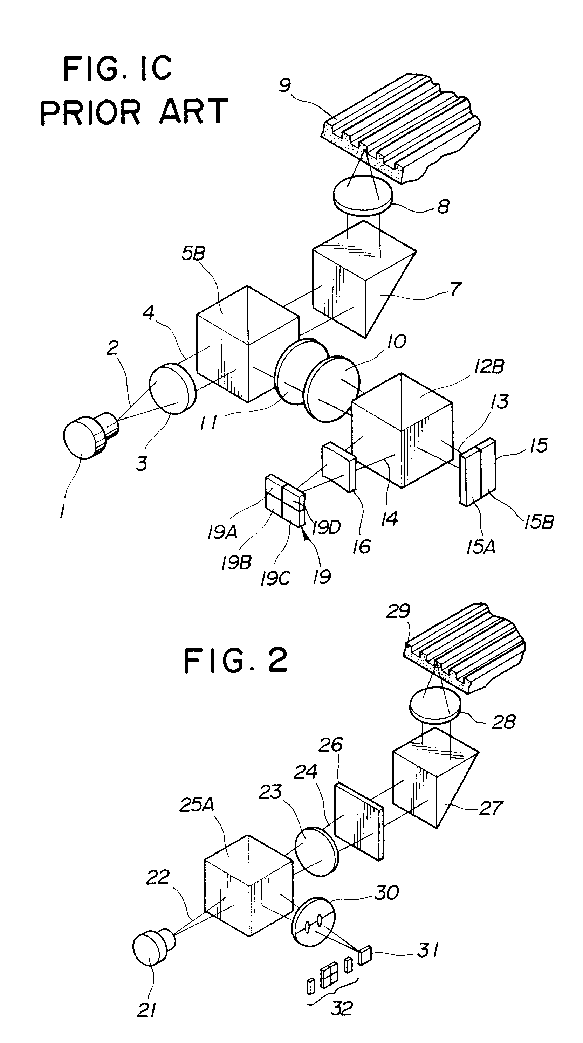

In Fig. 1C, there is shown a third conventional optical head in which like parts are indicated by like reference numerals as in Fig. 1B except that a 1/2 wavelength plate 11 is further provided between the beam splitter 5B and focusing lens 10.

In operation, the laser beam reflected from the optical disk 9 is reflected by the total reflecting prism 7 and then by the beam splitter 5B to be passed through the 1/2 wavelength plate 11, thereby being rotated in its polarized direction by ninety degrees. The operation of the third conventional optical head is performed in the substantially same manner as in the second conventional optical head as mentioned before except for the operation of the 1/2 wavelength plate 11.

Next, the preferred embodiments according to the invention will be explained in conjunction with Figs. 2 to 12.

In Fig. 2, there is shown an optical head in a first embodiment according to the invention. The optical head comprises a semiconductor laser 21 for radiating laser beam 22, a polarizing beam splitter 25A for passing the laser beam 22 and for reflecting the laser beam in the opposite direction, a collimating lens 23 for collimating the laser beam 22 to produce collimated laser beam 24, a 1/4 wavelength plate 26 for converting the collimated laser beam 24 into a circularly polarized laser beam and for converting the laser beam in the opposite direction into a linearly polarized laser beam, a total reflecting prism 27 for reflecting the laser beam, an object lens 28 for focusing the laser beam on an optical disc 29 and for collimating the laser beam which is reflected from the optical disc 29, a grating lens 30 for diffracting the laser beam which is reflected by the polarizing beam splitter 25A, an optical detector 31 for receiving zero-order diffraction light supplied from the grating lens 30, and a six-divided optical detector 32 for receiving first-order diffraction light supplied from the grating lens 30.

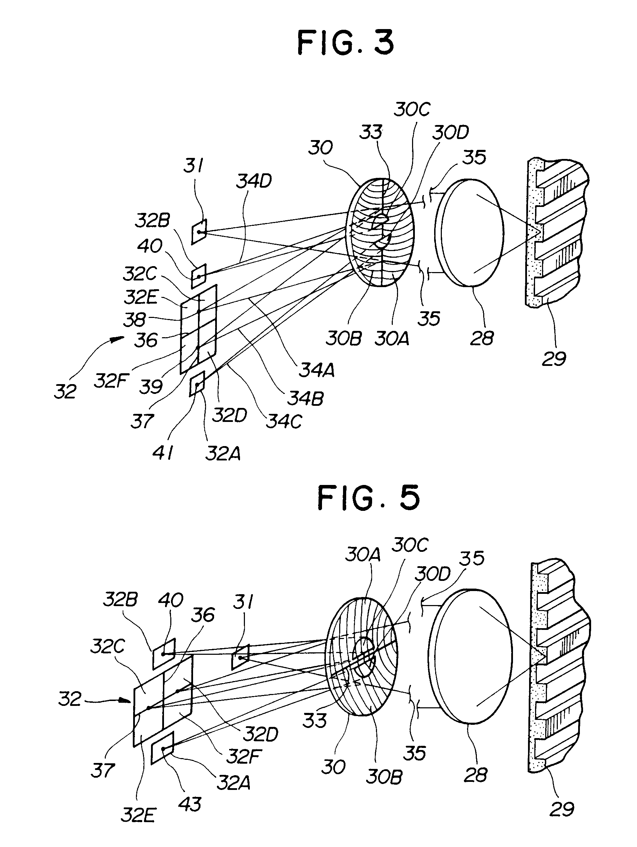

In Fig. 3, there is shown a relation of the grating lens 30, optical detector 31 and six-divided optical detector 32 in the first embodiment. The grating lens 30 is optically connnected through abbriviating portions 35 to the object lens 28 and optical disc 29. The grating lens 30 is divided into a first and second regions 30A and 30B each having a different focal length and diffraction direction from those of the other by a line 33 intersecting the light axis of the collimating lens 23, and is further provided with a third and fourth regions 30C and 30D each having a different focal length and diffraction direction from those of the first and second regions 30A and 30B on the line 33. The six-divided optical detector 32 includes separated optical detecting elements 32A and 32B, and optical detecting elements 32C to 32F divided by lines 36 and 37 orthogonal to each other. The first region 30A of the grating lens 30 has a grating pattern corresponding to interference fringes which are formed with spherical waves radiating respectively from the optical detector 31 and a point 38 on the dividing line 37 of the six-divided optical detector 32. The second region 30B of the grating lens 30 has a grating pattern corresponding to interference fringes which are formed with spherical waves radiating respectively from the optical detector 31 and a point 39 on the dividing line 37 of the six-divided optical detector 32, while the third and fourth regions 30C and 30D of the grating lens 30 have grating patterns respectively corresponding to interference fringes which are formed with spherical waves radiating respectively from the optical detector 31 and a point 40 of the optical detecting element 32B of the six-divided optical detector 32, and with spherical waves radiating respectively from the optical detector 31 and a point 41 of the optical detecting element 32A of the six-divided optical detector 32.

In operation, the laser beam 22 radiating from the semiconductor laser 21 is passed through the polarizing beam splitter 25A, and then collimated by the collimating lens 23. The collimated laser beam 24 is converted in the 1/4 wavelength plate into the circularly polarized laser beam which is reflected by the total reflecting prism 27. Thereafter, the laser beam is focussed on the optical disc 29 by the object lens 28, and then reflected therefrom. The reflected laser beam is received through the object lens 28 and total reflecting prism 27 in the 1/4 wavelength plate to be converted into the linearly polarized laser beam having a polarized plane orthogonal to the polarization of the laser beam path. Thereafter, the laser beam is focussed by the collimating lens 23 to be reflected by the polarizing beam splitter 25A. The laser beam thus reflected is diffracted in the grating lens 30 so that the first-order diffraction lights 34A to 34D are received on the points 38 to 41 of the six-divided optical detector 32, while the zero-order diffraction light is received in the optical detector 31.

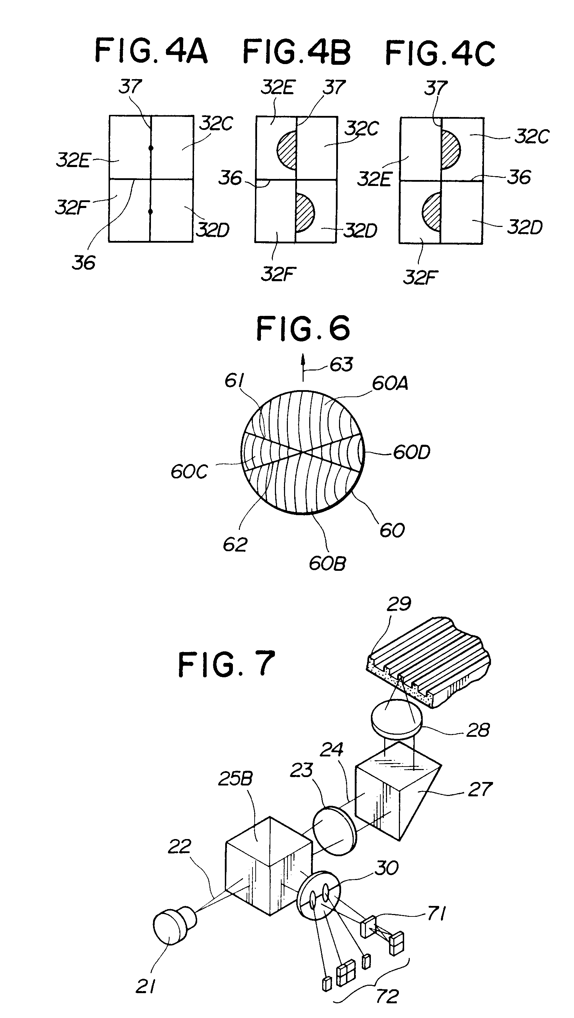

In Fig. 4A, the diffraction lights 34A and 34B from the first and second regions 30A and 30B of the grating lens 30 are focussed on the line 37 at the symmetrical upper and lower points in regard to the line 36 in a case where the laser beam is exactly focussed on the optical disc 29 by the object lens 28.

In Fig. 4B, there are shown diffraction lights 34A and 34B which are supplied to the six-divided optical detector 32 in a case where the distance between the surface of the optical disk 29 on which the laser beam is focussed and the object lens 28 is longer due to the moving of the optical disk 29. The diffraction lights 34A and 34B are not supplied to the optical elements 32C and 32F, but to the optical elements 32D and 32E.

In Fig. 4C, there are shown diffraction lights 34A and 34B which are supplied to the six-divided optical detector 32 in a case where the surface of the optical disk 29 becomes nearer the object lens 28 than the focal length so that the diffraction lights 34A and 34B are not supplied to the optical detecting elements 32D and 32E, but to the optical detecting elements 32C and 32F.

Accordingly, if it is assumed that outputs of the optical detecting elements 32C to 32F are $V_{32C}$, $V_{32D}$, $V_{32E}$ and $V_{32F}$, a focus error signal is obtained in the equation of $V_{32C} + V_{32F} - V_{32D} - V_{32E}$.

On the other hand, a track error signal is obtained by detecting the imbalance of the intensity distribution of light which is reflected from the optical disk 29 when a spot which is focussed on the optical disk 29 is deviated off the center of a track thereof. For this purpose, the grating lens 30 is arranged such that the light axis of the object lens 28 intersects a line connecting the centers of the third and fourth regions 30C and 30D in the center thereof, and the line is parallel to the direction of a track error.

If a tracking error is induced on the optical disk 29, the lights which are supplied to the third and fourth regions 30C and 30D are different in their amount from the other. Therefore, the difference of the light amounts is calculated to detect the tracking error in accordance with outputs of the optical detecting elements 32A and 32B. The direction of the tracking error is decided dependent on the tracking error signal being positive or negative. In addition, a signal which is reproduced from the optical disk 29 is obtained in accordance with an output of the optical detector 31.

Here, a possible problem in which the diffraction angle is changed at the grating lens 30 dependent on the fluctuation of a wavelength in the semiconductor laser 21, thereby resulting in deviation of positions on the optical detectors 31 and 32 to which diffraction lights are supplied will be discussed. In regard to the position deviation parallel to the dividing line 37, at first, it is not considered to be "a problem", unless such a deviation as crossing over the dividing line 36 or missing the optical detector is occured. In regard to the deviation orthogonal to the dividing line 37, next, a caution should be taken because outputs of the optical detecting elements 32C to 32F for the optical detector 32 are changed. In the invention, however, the first and second regions 30A and 30B of the grating lens 30 do not have spatial frequency in this direction so that the position deviation of diffraction lights is negligible in this direction. In regard to the detection of the tracking error, the optical detecting elements 32A and 32B are positioned to receive diffraction lights in the center thereof so that no problem is resulted even if the wavelength is changed in the semiconductor laser 21.

In the first embodiment according to the invention, further, the grating lens 30 is structured to have the third and fourth regions 30C and 30D each having the same area which is symmetrically positioned in regard to the light axis so that a direct current offset as mentioned before is not occured in detecting a tracking error for the reason that the light amounts which are received in the third and fourth regions 30C and 30D are not changed even if the light axis of the object lens 28 is moved in the vertical direction in regard to a track of the optical disk 29.

In Fig. 5, there is shown an optical head in the second embodiment according to the invention. The optical head is the same as one in the first embodiment except that the dividing line 37 of the six-divided optical detector 32 is parallel to the track direction of the optical disk 29 so that the third and fourth regions 30C and 30D of the grating lens 30 are positioned on the both sides of the dividing line 33 thereof, and except that the optical detecting elements 32A and 32B for detecting a tracking error are positioned on an extended line of the dividing line 36.

As a matter of course, the six-divided optical detector 32 may be rotated around the light axis of the grating lens 30 together with the dividing line 33 thereof by a predetermined angle in the first and second embodiments. Further, the optical detecting elements 32A and 32B may be changed in their position if they both can receive diffraction lights separately from the third and fourth regions 30C and 30D of the grating lens 30.

In Fig. 6, there is shown a grating lens 60 which is applied to an optical head in the third embodiment according to the invention. The grating lens 60 is provided with a first to fourth regions 60A to 60D divided by lines 61 and 62. The first to fourth regions 60A to 60D correspond to the first to fourth regions 30A and 30D of the grating lens 30 in the first and second embodiments so that the same operation as in the first embodiment is performed when the grating lens 60 is arranged to be aligned with a tracking direction of an optical disk as shown by arrow 63.

In Fig. 7, there is shown an optical head in the fourth embodiment according to the invention. The optical head comprises a semiconductor laser 21 from which laser beam 22 radiates, a beam splitter 25B for passing the laser beam 22 and for reflecting laser beam in the opposite direction thereto, a collimating lens 23 for collimating laser beam which is passed through the beam splitter 25B and for focusing laser beam in the opposite direction thereto, a total reflecting prism 27 for reflecting collimated laser beam 24 in the opposite direction thereto, an object lens 28 for focusing laser beam which is reflected by the total reflecting prism 27 on an optical disk 29 and for collimating laser beam which is reflected from the optical disk 29, a grating lens 30 for diffracting the laser beam which is reflected by the beam splitter 25B, a polarizing prism 71 for dividing zero-order diffraction light supplied from the grating lens 30 into two polarized laser beams each having a polarized plane orthogonal to the other, and an eight-divided optical detector 72 having a first group of six optical detecting elements for receiving diffraction laser beams and a second group of two optical detecting elements for receiving the zero-order diffraction light.

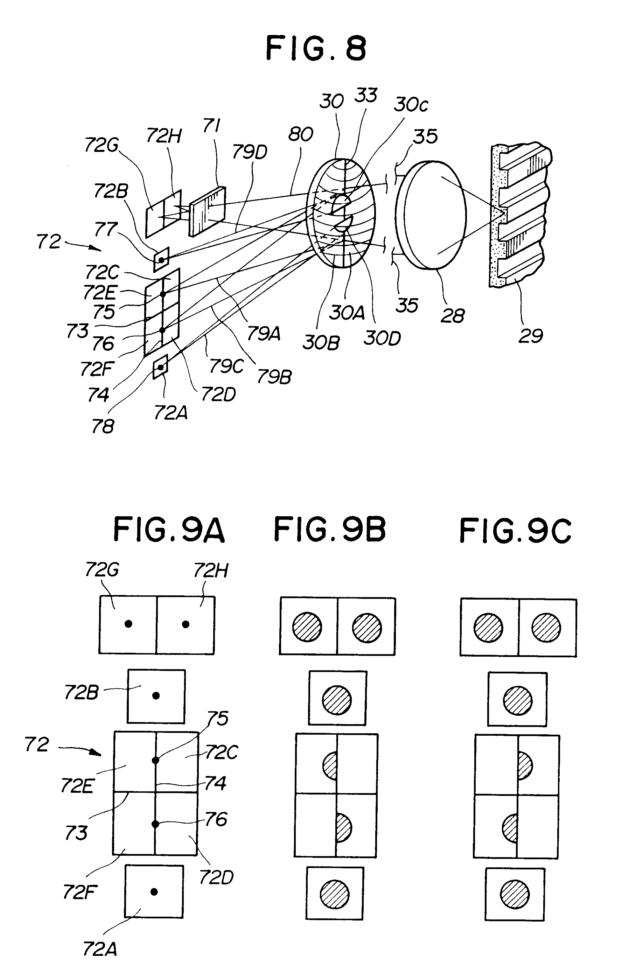

In Fig. 8, there is shown a relation of the grating lens 30, polarizing prism 71 and eight-divided optical detector 72 in the fourth embodiment. The grating lens 30 is optically connected through abbriviating portions 35 to the object lens 28 and optical disc 29. The grating lens 30 is divided into a first and second regions 30A and 30B each having a different focal length and diffraction direction from those of the other by line 33 intersecting the light axis of the collimating lens 23, and is further provided with a third and fourth regions 30C and 30D each having a different focal length and diffraction direction from those of the first and second regions 30A and 30B on the line 33. The eight-divided optical detector 72 includes a the first group consisted of separated optical detecting elements 72A and 72B, and optical detecting elements 72C to 72F divided by lines 73 and 74 orthogonal to each other, and a second group consisted of optical detecting elements 72G and 72H. The first region 30A of the grating lens 30 has a grating pattern corresponding to interference fringes which are formed with spherical waves radiating respectively from a convergence point of the zero-order diffraction light 80 and a point 75 on the dividing line 74 of the eight-divided optical detector 72. The second region 30B of the grating lens 30 has a grating pattern corresponding to interference fringes which are formed with spherical waves radiating respectively from the convergence point of the zero-order diffraction light 80 and a point 76 on the dividing line 74 of the eight-divided optical detector 32, while the third and fourth regions 30C and 30D of the grating lens 30 have grating patterns respectively corresponding to interference fringes which are formed with spherical waves radiating respectively from the convergence point of the zero-order diffraction light 80 and a point 77 of the optical detecting element 72B of the eight-divided optical detector 72, and with spherical waves radiating respectively from the convergence point of the zero order diffracting light 80 and a point 78 of the optical detecting element 72A of the eight-divided optical detector 72.

In operation, the laser beam which is supplied through the object lens 28 to the grating lens 30 after being reflected on the optical disk 29 is diffracted to be received on the points 75, 76, 77 and 78 of the eight-divided optical detector 72 as diffraction lights 79A, 79B, 79C and 79D. On the other hand, the zero-order diffraction light 80 which is not diffracted is divided into two polarized lights each having a polarized plane orthogonal to the other by the polarizing prism 71. The two polarized lights are received on the optical detecting elements 72G and 72H of the eight-divided optical detector 72 respectively. A RF signal is obtained in the calculation of the subtraction between outputs of the two optical detecting elements 72G and 72H.

In Fig. 9A, the diffraction lights 79A and 79B from the first and second regions 30A and 30B of the grating lens 30 are focussed on the line 74 of the eight-divided optical detector 72 at the symmetrical upper and lower points 75 and 74 in regard to the line 73 in a case where the laser beam is exactly focussed on the optical disk 29 by the object lens 28.

In Fig. 9B, there are shown diffraction lights 79A and 79B which are supplied to the eight-divided optical detector 72 in a case where the distance between the surface of the optical disk 29 on which the laser beam is focussed and the object lens 28 is longer due to the moving of the optical disc 29. The diffraction lights 79A and 79B are not supplied to the optical detecting elements 72C and 72F, but to the optical detecting elements 72D and 72E.

In Fig. 9C, there are shown diffraction lights 79A and 79B which are supplied to the eight-divided optical detector 72 in a case where the surface of the optical disc 29 becomes nearer the object lens 28 than the focal length so that the diffraction lights 79A and 79B are not supplied to the optical detecting elements 72D and72E, but to the optical detecting elements 72C and 72F.

Accordingly, if it is assumed that outputs of the optical detecting elements 72C to 72F are $V_{72C}$, $V_{72D}$, $V_{72E}$ and $V_{72F}$, a focus error signal is obtained in the equation of $V_{72C} + V_{72F} - V_{72D} - V_{72E}$.

On the other hand, a track error signal is obtained in the same manner as in the first embodiment. Further, the optical head in the fourth embodiment may be modified by use of the grating lens 30 or 60 in Fig. 5 or 6 as explained before.

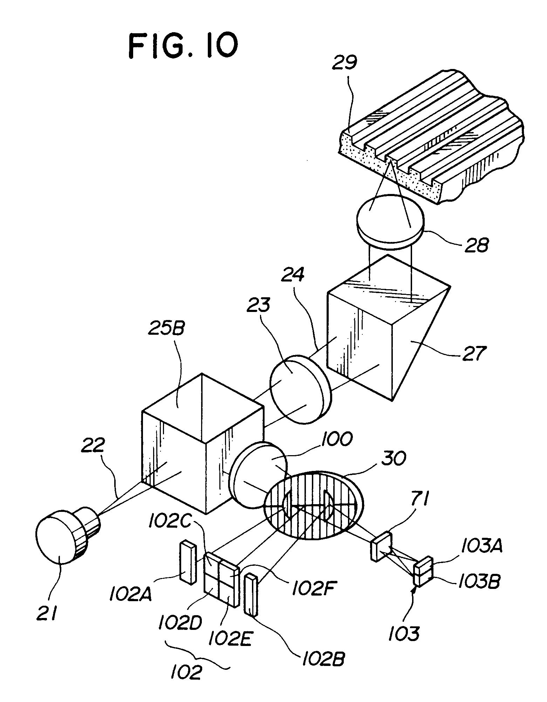

In Fig. 10, there is shown an optical head in the fifth embodiment according to the invention in which like parts are indicated by like reference numerals as in Fig. 7, provided that the optical head is different from one in Fig. 7 in that a 1/2 wavelength plate 100 for rotating the laser beam which is reflected by the beam splitter 25B in its polarization by ninety degrees is further provided between the beam splitter 25B and grating lens 30, the eight-divided optical detector 72 is replaced by a six-divided optical detector 102 and two-divided optical detector 103, and a grating lens 30 having a specified ratio $\lambda/d$ of 1.6 is utilized in a case where a grating of a sinusoidal cross section having a ratio h/d of 0.5 is utilized, where $\lambda$ is the wavelength, d is the pitch of gratings, and h is a depth of a grating groove.

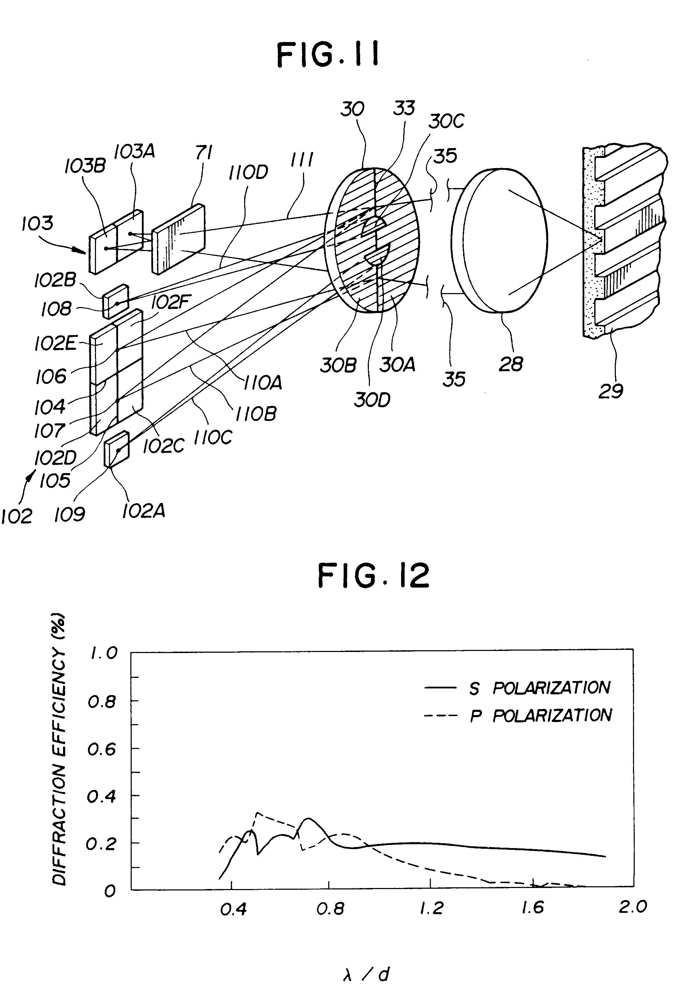

In Fig. 11, there is shown a relation of the grating lens 30, optical detector 103 and six-divided optical detector 102 in the fifth embodiment. The grating lens 30 is optically connected through abbriviating portions 35 to the object lens 28 and optical disk 29. The grating lens 30 is divided into a first and second regions 30A and 30B each having a different focal length and diffraction direction from those of the other by a line 33 intersecting the light axis of the collimating lens 23, and is further provided with a third and fourth regions 30C and 30D each having a different focal length and diffraction direction from those of the first and second regions 30A and 30B on the line 33. The six-divided optical detector 102 includes separated optical detecting elements 102A and 102B, and optical detecting elements 32C to 32F divided by lines 104 and 105 orthogonal to each other. The first region 30A of the grating lens 30 has a grating pattern corresponding to interference fringes which are formed with spherical waves radiating respectively from a convergence point of the zero-order diffraction light 111 and a point 106 on the dividing line 105 of the six-divided optical detector 102. The second region 30B of the grating lens 30 has a grating pattern corresponding to interference fringes which are formed with spherical waves radiating respectively from the convergence point of the zero-order diffraction light 111 and a point 107 on the dividing line 105 of the six-divided optical detector 102, while the third and fourth regions 30C and 30D of the grating lens 30 have grating patterns respectively corresponding to interference fringes which are formed with spherical waves radiating respectively from the convergence point of the zero-order diffraction light 111 and a point 108 of the optical detecting element 102B of the six-divided optical detector 102, and with spherical waves radiating respectively from the convergence point of the zero-order diffraction light 111 and a point 109 of the optical detecting element 102A of the six-divided optical detector 102.

Fig. 12 shows the diffraction efficiency which is dependent on the ratio $\lambda/d$ in a case where a grating of a sinusoidal cross section having the ratio h/d of 0.5 is adopted. As clearly shown therein, the diffraction efficiency of p-polarized light is substantially zero if the ratio $\lambda/d$ is equal to or more than 1.5. Accordingly, the grating lens 30 is arranged such that the polarization of signals is to be p-polarized light on the surface of the grating lens 30 in the fifth embodiment. Therefore, a high S/N ratio is obtained because the p-polarized signals are received in the polarizing prism 71 and optical detector 103 by almost 100%.

In operation, the laser beam which is reflected from the optical disk 29 to be supplied to the grating lens 30 is diffracted to be diffraction lights 110A, 110B, 110C and 110D which are then received at the points 106, 107, 108 and 109 on the optical detecting elements 102A, 102B, 102C, 102D, 102E and 102F. The zero-order diffraction light 111 is divided into two polarized lights each having a polarized plane orthogonal to the other which are then received on the optical detecting elements 103A and 103B of the two-divided optical detector 103. A RF signal is obtained in the calculation of the sbstraction between outputs of the optical detecting elements 103A and 103B. The detection of the track and focus errors is understood in accordance with the explanations of the former embodiments so that repeated explanations are omitted here. Further, the optical head may be modified by use of the grating lens 30 or 60 is Fig. 3 or 6. As a matter of course, the optical disk 29 may be replaced by a magneto-optical disk.

**Claims**

1. An optical head comprising,

a light source (21) for radiating a light beam,

an object lens (28) for focusing said light beam on a recording medium (29),

a beam splitter (25) for separating a light beam which is reflected from said recording medium (29),

a grating lens (30, 60) for diffracting said light beam separated by said beam splitter (25),

and

an optical detector (31, 32; 72) having a plurality of light receiving surfaces, characterized in that said grating lens (30, 60) comprises a plurality of regions (30A-D) of different properties in regard to the focal length and/or diffraction direction

wherein light beams diffracted by said grating lens (30, 60) comprising a zero-order diffraction light beam are detected by said plurality of light receiving surfaces corresponding thereto and wherein a signal which is reproduced from said recording medium (29) is obtained from said zero-order diffraction light beam.

2. An optical head according to claim 1, characterized by

a 1/4 wavelength plate (26) for converting said light beam from said light source (21) into a circularly polarized light beam and for converting said circularly polarized light beam in the direction opposite to said light beam into a linearly polarized beam, and that the said beam splitter is,

a polarizing beam splitter (25A) for separating the light beam which is reflected from said recording medium (29) to be received through said 1/4 wavelength plate (26).

3. An optical head according to claim 1, characterized by

a 1/2 wavelength plate (100) for rotating light beam separated by said beam splitter (25) in its polarized plane by ninety degrees.

4. An optical head according to any of claims 1 to 3, characterized by

a polarizing means (71) for converting said zero-order diffraction light beam received from said grating lens (30, 60) into two linearly polarized light beams having orthogonally polarized planes, and

wherein light beams diffracted by said grating lens (30, 60) and said two linearly polarized light beams are detected by said plurality of light receiving surfaces corresponding thereto.

5. An optical head according to any of claims 1 to 4,

wherein said grating lens (30) is composed of first and second regions (30A, B) divided by a line (33) intersecting the light axis of said object lens (28) and being parallel to the tracking error direction of said recording medium (29), and of third and fourth regions (30C, D) provided symmetrically on said line (33),

said first and second regions (30A, B) being different in their focal lengths and diffraction directions from each other, and said third and fourth regions (30C, D) being different in their focal lengths and diffraction directions from said first and second regions (30A, B) and

said plurality of light receiving surfaces of said optical detector are positioned dependent upon the arrangement of said first to fourth regions of said grating lens (30).

6. An optical head according to any of claims 1 to 4,

wherein said grating lens (30) is composed of first and second regions (30A, B) divided by a line (33) intersecting the light axis of said object lens (28) and being parallel to the track of said recording medium (29), and of third and fourth regions (30C, D) provided symmetrically on the both sides of said line (33),

said first and second regions (30A, B) being different in their focal lengths and diffraction directions from each other, and said third and fourth regions (30C, D) being different in their focal lengths and diffraction directions from said first and second regions (30A, B), and

said plurality of light receiving surfaces of said optical detector are positioned dependent upon the arrangement of said first to fourth regions of said grating lens (30).

7. An optical head according to any of claim 1 to 4,

wherein said grating lens (60) is composed of first to fourth regions (60A-D) divided by two lines (61, 62) each being intersected in the center thereof and being not parallel and perpendicular to the track of said recording medium (29),

said first and second regions (60A, B) being different in their focal lengths and diffraction directions from each other, and said third and fourth regions (60C, D) being different in their focal lengths and diffraction directions from said first and second regions (60A, B) and

said plurality of light receiving surfaces of said optical detector are positioned dependent upon the arrangement of said first to fourth regions of said grating lens (60).

8. An optical head according to any of claims 1 to 7,

wherein the ratio of the wavelength of said light beam in regard to a pitch of gratings of said grating lens (30) is equal to or more than 1.5 when the ratio of the depth of said grating in regard to said pitch is 0.5, and said grating lens (30) is arranged such that the polarization of said light beam is of p-polarization on the surface of said grating lens (30).

## Revendications

1. Tête optique comprenant :

une source lumineuse (21) pour rayonner un faisceau lumineux,

une lentille d'objectif (28) pour focaliser le faisceau lumineux sur un support d'enregistrement (29),

un séparateur de faisceaux (25) pour séparer un faisceau lumineux qui est réfléchi à partir du support d'enregistrement (29),

une lentille de diffraction (30, 60) pour diffracter le faisceau lumineux séparé par le séparateur de faisceaux (25), et

un détecteur optique (31, 32 ; 72) comportant une multitude de surfaces de réception de lumière, caractérisé en ce que la lentille de diffraction (30, 60) comprend une multitude de régions (30A à 30D) de propriétés différentes eu égard à la longueur focale et/ou le sens de diffraction dans laquelle les faisceaux lumineux diffractés par la lentille de diffraction (30, 60) comprenant un faisceau lumineux de diffraction d'ordre zéro sont détectés par la multitude de surfaces de réception de lumière correspondant à celui-ci et dans lequel un signal qui est reproduit à partir dudit support d'enregistrement (29) est obtenu à partir du faisceau lumineux de diffraction d'ordre zéro.

2. Tête optique selon la revendication 1, caractérisée en ce qu'elle comprend :

une lame 1/4 d'onde (26) pour convertir le faisceau lumineux provenant de la source lumineuse (21) en un faisceau lumineux circulairement polarisé et pour convertir le faisceau lumineux circulairement polarisé dans le sens opposé au faisceau lumineux en faisceau linéairement polarisé et en ce que le séparateur de faisceaux est :

un séparateur de faisceaux de polarisation (25A) pour séparer le faisceau lumineux qui est réfléchi à partir du support d'enregistrement (29) qui doit être reçu à travers la lame 1/4 d'onde (26).

3. Tête optique selon la revendication 1, caractérisée en ce qu'elle comprend :

une lame 1/2 onde (100) pour tourner le faisceau lumineux séparé par le séparateur de faisceaux (25) dans son plan polarisé de 90°.

4. Tête optique selon l'une quelconque des revendications 1 à 3, caractérisée en ce qu'elle comprend :

un moyen de polarisation (71) pour convertir le faisceau lumineux de diffraction d'ordre zéro reçu à partir de la lentille de diffraction (30, 60) en deux faisceaux lumineux linéairement polarisés présentant des plans orthogonalement polarisés, et

dans laquelle les faisceaux lumineux diffractés par la lentille de diffraction (30, 60) et les deux faisceaux lumineux linéairement polarisés sont détectés par la multitude des surfaces de réception de lumière correspondant à ceux-ci.

5. Tête optique selon l'une quelconque des revendications 1 à 4, dans laquelle la lentille de diffraction (30) est constituée des première et seconde régions (30A, B) divisées par une ligne (33) intersectant l'axe de la lumière de la lentille d'objectif (28) et étant parallèles à la direction d'erreur d'alignement du support d'enregistrement (29) et des troisième et quatrième régions (30C, D) placées symétriquement sur la ligne (33),

les première et seconde régions (30A, B) étant différentes en ce qui concerne leur longueur focale et leur sens de diffraction l'une par rapport à l'autre et les troisième et quatrième régions (30C, D) étant différentes en ce qui concerne leur longueur focale et leur sens de diffraction par rapport aux première et seconde régions (30A, B), et

la multitude de surfaces de réception de la lumière du détecteur optique sont positionnées fonction de la disposition des première au quatrième régions de la lentille de diffraction (30).

6. Tête optique selon l'une quelconque des revendications 1 à 4,

dans laquelle la lentille de diffraction (30) est constituée des première et seconde régions (30A, B) divisées par une ligne (33) intersectant l'axe lumineux de la lentille d'objectif (28) et étant parallèles à la piste du support d'enregistrement (29) et des troisième et quatrième régions (30C, D) prévues symétriquement sur les deux côtés de la ligne (33),

les première et seconde régions (30A, B) étant différentes en ce qui concerne leur longueur focale et leur sens de diffraction l'une par rapport à l'autre et les troisième et quatrième régions (30C, D) étant différentes en ce qui concerne leur longueur focale et leur sens de diffraction par rapport aux première et seconde régions (30A, B), et

la multitude de surfaces de réception de la lumière du détecteur optique sont positionnées fonction de la disposition des première au quatrième régions de la lentille de diffraction (30).

7. Téte optique selon l'une quelconque des revendications 1 à 4,

dans laquelle la lentille de diffraction (60) est constituée des première au quatrième régions (60A à D) divisées par deux lignes (61, 62) chacune étant intersectée au centre de celle-ci et n'étant pas parallèle et perpendiculaire à la piste du support d'enregistrement (29),

les première et seconde régions (60A, B) étant différentes en ce qui concerne leur longueur focale et leur sens de diffraction l'une par rapport à l'autre et les troisième et quatrième régions (60C, D) étant différentes en ce qui concerne leur longueur focale et leur sens de diffraction par rapport aux première et seconde régions (60A, B) et

la multitude de surfaces de réception de la lumière du détecteur optique sont positionnées fonction de la disposition des première au quatrième régions de la lentille de diffraction (60).

8. Tête optique selon l'une quelconque des revendications 1 à 7,

dans laquelle le rapport de la longueur d'onde du faisceau lumineux eu égard au pas des réseaux de diffraction de la lentille de diffraction (30) est égal à ou supérieur à 1,5 lorsque le rapport de la profondeur du réseau de diffraction eu égard au pas est de 0,5 et la lentille de diffraction (30) est disposée de manière telle que la polarisation du faisceau lumineux est une polarisation p sur la surface de la lentille de diffraction (30).

**Patentansprüche**

1. Optischer Kopf mit:
einer Lichtquelle (21) zum Ausstrahlen eines Lichtstrahls,
einer Objektivlinse (28) zum Fokussieren des Lichtstrahls auf ein Aufzeichnungsmedium (29),
einem Strahlteiler (25) zum Trennen eines Lichtstrahls, der vom Aufzeichnungsmedium (29) reflektiert wird,
einer Beugungslinse (30, 60) zum Beugen des durch den Strahlteiler (25) getrennten Lichtstrahls, und
einem optischen Aufnehmer (31, 32; 72) mit mehreren lichtempfangenden Oberflächen,
**dadurch gekennzeichnet,** daß die Beugungslinse (30, 60) mehrere Bereiche (30A-D) unterschiedlicher Eigenschaften hinsichtlich der Brennweite und/oder Beugungsrichtung aufweist, wobei die von der Beugungslinse (30, 60) gebeugten Lichtstrahlen, die einen Beugungslichtstrahl nullter Ordnung aufweisen, von den mehreren entsprechenden lichtempfangenden Flächen empfangen werden, und wobei ein vom Aufzeichnungsmedium (29) reproduziertes Signal von dem Beugungslichtstrahl nullter Ordnung erhalten wird.

2. Optischer Kopf nach Anspruch 1, **gekennzeichnet durch** eine 1/4-Wellenlängenplatte (26) zum Wandeln des Lichtstrahls von der Lichtquelle (21) in einen zirkular polarisierten Lichtstrahl und zum Wandeln des zirkular polarisierten Lichtstrahls in die dem Lichtstrahl entgegengesetzte Richtung in einen linear polarisierten Strahl, und daß der Strahlteiler ein polarisierender Strahlteiler (25A) ist zum Trennen des Lichtstrahls, der vom Aufzeichnungsmedium (29) reflektiert wird, um durch die 1/4-Wellenlängenplatte (26) empfangen zu werden.

3. Optischer Kopf nach Anspruch 1, **gekennzeichnet durch** eine 1/2-Wellenlängenplatte (100) zum Drehen des durch den Strahlteiler (25) getrennten Lichtstrahls in seiner Polarisationsebene um 90°.

4. Optischer Kopf nach einem der Ansprüche 1 bis 3, **gekennzeichnet durch**
eine Polarisationseinrichtung (71) zum Wandeln des Beugungslichtstrahls nullter Ordnung, der von der Beugungslinse (30, 60) empfangen wird, in zwei linear polarisierten Lichtstrahlen mit orthogonalen Polarisationsebenen, und
wobei durch die Beugungslinse (30, 60) gebeugten Lichtstrahlen und die zwei linear polarisierten Lichtstrahlen von den mehreren entsprechenden lichtempfangenden Flächen aufgenommen werden.

5. Optischer Kopf nach einem der Ansprüche 1 bis 4, wobei die Beugungslinse (30) aus einem ersten und zweiten Bereich (30A, B), die durch eine Linie (33) geteilt werden, die die Lichtachse der Objektivlinse (28) schneidet und zu der Spurfehlerrichtung des Aufzeichnungsmediums (29) parallel ist, und aus einem dritten und vierten Bereich (30C, D) besteht, die symmetrisch auf der Linie (33) angeordnet sind,

der erste und zweite Bereich (30A, B) sich in ihren Brennweiten und Beugungsrichtungen voneinander unterscheiden, der dritte und vierte Bereich (30C, D) sich in ihren Brennweiten und Beugungsrichtungen von dem ersten und zweiten Bereich (30A, B) unterscheiden, und die mehreren lichtempfangenden Flächen des optischen Aufnehmers abhängig von der Anordnung des ersten bis vierten Bereichs der Beugungslinse (30) positioniert sind.

6. Optischer Kopf nach einem der Ansprüche 1 bis 4, wobei die Beugungslinse (30) aus einem ersten und zweiten Bereich (30A, B), die durch eine Linie (33) geteilt werden, die die Lichtachse der Objektivlinse (28) schneidet und mit der Spur des Aufzeichnungsmediums (29) parallel ist, und aus einem dritten und vierten Bereich (30C, D) besteht, die auf beiden Seiten der Linie (33) angeordnet sind,

der erste und zweite Bereich (30A, B) sich in ihren Brennweiten und Beugungssrichtungen voneinander unterscheiden, und der dritte und vierte Bereich (30C, D) sich in ihren Brennweiten und Beugungsrichtungen von dem ersten und zweiten Bereich (30A, B) unterscheiden, und

die mehreren lichtempfangenden Flächen des optischen Aufnehmers abhängig von der Anordnung des ersten bis vierten Bereichs der Beugungslinse (30) positioniert sind.

7. Optischer Kopf nach einem der Ansprüche 1 bis 4, wobei die Beugungslinse (60) aus einem ersten bis vierten Bereich (60A-D) besteht, die durch zwei Linien (61, 62) geteilt sind, die jede in ihren Mitten geschnitten wird und nicht parallel und senkrecht zur Spur des Aufzeichnungsmediums (29) ist,

der erste und zweite Bereich (60A, B) sich in ihren Brennweiten und Beugungsrichtungen voneinander unterscheiden, und

der dritte und vierte Bereich (60C, D) sich in ihren Brennweiten und Beugungsrichtungen von dem ersten und zweiten Bereich (60A, B) unterscheiden, und

die mehreren lichtempfangenden Flächen des optischen Aufnehmers abhängig von der Anordnung des ersten bis vierten Bereichs der Beugungslinse (60) positioniert sind.

8. Optischer Kopf nach einem der Ansprüche 1 bis 7, wobei das Verhältnis der Wellenlänge des Lichtstrahls bezüglich eines Gitterabstands der Beugungslinse (30) gleich ist oder mehr als das 1,5-fache beträgt, wenn das Verhältnis der Tiefe des Gitters hinsichtlich des Abstandes 0,5 beträgt und wobei die Beugungslinse (30) so angeordnet ist, daß die Polarisation des Lichtstrahls p-Polarisation auf der Oberfläche der Beugungslinse (30) hat.

# FIG. IA
# PRIOR ART

# FIG. IB
# PRIOR ART

## FIG. 1C
## PRIOR ART

## FIG. 2

# FIG. 3

# FIG. 5

# FIG.4A  FIG.4B  FIG.4C

# FIG.6

# FIG.7

# FIG. 8

# FIG. 9A    FIG. 9B    FIG. 9C

# FIG. 10

# FIG. 11

# FIG. 12

$\lambda / d$